# EUROPÄISCHE PATENTSCHRIFT

(11) **EP 3 503 329 B1**
(45) Veröffentlichungstag und Bekanntmachung des Hinweises auf die Patenterteilung: **05.08.2020**
(21) Anmeldenummer: 17306827.1
(22) Anmeldetag: 19.12.2017
(51) Int. Cl.: H02G 15/34, H01B 12/16

(54) **VERFAHREN ZUM KÜHLEN EINES SUPRALEITFÄHIGEN KABELSYSTEMS**
METHOD FOR COOLING A SUPER-CONDUCTIVE CABLE SYSTEM
PROCÉDÉ DE REFROIDISSEMENT D'UN SYSTÈME DE CÂBLAGE SUPRACONDUCTEUR

(43) Veröffentlichungstag der Anmeldung: 26.06.2019
(73) Patentinhaber: Nexans, 92400 Courbevoie (FR)
(72) Erfinder: STEMMLE, Mark, 30175 Hannover (DE); LANGE, Stephan, 30900 Wedemark (DE)
(74) Vertreter: Feray, Valérie

(56) Entgegenhaltungen:
- EP-A1- 1 667 172
- EP-A1- 2 418 747
- EP-A1- 2 770 514
- WO-A2-2014/026873
- JP-A- H03 263 710
- JP-B2- 3 818 328

## Beschreibung

### Gebiet

Die Erfindung betrifft ein Verfahren zum Kühlen des supraleitfähigen Kabelsystems.

### Hintergrund

Supraleitfähiges Material hat unter anderem die Eigenschaft, dass sein elektrischer Widerstand auf Null sinkt, wenn es auf Temperaturen unterhalb der sogenannten Sprungtemperatur abgekühlt wird. Bei der Sprungtemperatur geht es in den sogenannten supraleitenden Zustand über. Der supraleitende Zustand existiert so lange wie die Temperatur T, die Stromstärke I und das magnetische Feld B unter entsprechenden kritischen Werten bleiben, die individuell von dem jeweiligen supraleitfähigen Material abhängen. Bevor im Jahr 1986 keramische Supraleiter entdeckt wurden, waren nur metallische Supraleiter bekannt. Unter den keramischen Supraleitern sind vor allem diejenigen Verbindungen von praktischer Bedeutung, deren Sprungtemperatur oberhalb der Temperatur von flüssigem Stickstoff liegt, die 77 K beträgt. Dieser Wert ist deshalb von besonderer Bedeutung, weil flüssiger Stickstoff ein vergleichsweise kostengünstiges Kühlmittel darstellt. Geeignete keramische Materialien sind beispielsweise mit seltenen Erden dotierte Materialien, die unter der Bezeichnung ReBCO (Rare-Earth-Barium-Kupfer-Oxid) bekannt geworden sind. Zu den keramischen Materialien, welche die genannten Eigenschaften erfüllen, gehört insbesondere YBCO (Yttrium-Barium-Kupfer-Oxid) mit einer Sprungtemperatur von 92 K. Ein anderes dieser supraleitfähigen Materialien ist beispielsweise BSCCO (Wismut-Strontium-Kalzium-Kupfer-Oxid) mit einer Sprungtemperatur von 110 K. Für die genannten supraleitfähigen Materialien geeignete Kühlmittel sind beispielsweise Stickstoff, Helium, Neon und Wasserstoff oder Gemische dieser Stoffe.

Ein supraleitfähiges Kabel hat in heutiger Technik elektrische Leiter aus einem Verbundwerkstoff, welcher keramisches Material enthält, das bei ausreichend tiefen Temperaturen in den supraleitenden Zustand übergeht. Der elektrische Gleichstromwiderstand eines entsprechend aufgebauten Leiters ist bei ausreichender Kühlung Null, solange eine bestimmte Stromstärke und eine bestimmte Magnetfeldstärke nicht überschritten werden. Um die erforderlichen niedrigeren Temperaturen zu erreichen, ist der supraleitfähige Leiter von einem Kabelkryostaten umgeben, der das Kühlmittel, insbesondere flüssigen Stickstoff, enthält und die Einstrahlung von Umgebungswärme auf das Kühlmittel und das supraleitfähige Kabel weitgehend unterbindet.

Vor der Inbetriebnahme eines supraleitfähigen Kabels oder eines Kabelsystems, das mehrere supraleitfähige Kabel aufweist, muss der supraleitfähige Leiter auf Temperaturen unterhalb der entsprechenden Sprungtemperatur abgekühlt werden.

Aus der EP 2770514 A1 ist ein Verfahren bekannt, bei dem ein Kühlmittel zunächst in einer Richtung an einem Ende des Kabelkryostaten eingeleitet und an dem anderen Ende des Kabelkryostaten in die Umgebung abgeleitet wird. Zu Beginn des Abkühlungsprozesses wird als Kühlmittel kalter gasförmiger Stickstoff eingesetzt, dessen Temperatur allmählich immer weiter abgesenkt wird bis schließlich flüssiger Stickstoff an dem ersten Ende des Kabelkryostaten eintritt. Jetzt wird an dem zweiten Ende des Kabelkryostaten der Stickstoff nicht mehr in die Umgebung abgeleitet, sondern in einer Rückführungsleitung an eine Kühlanlage zurückgeführt. Die Kühlanlage ist mit einem Kryotank verbunden, der einen Vorrat an flüssigen Stickstoff bereitstellt. Der zu Beginn des Abkühlungsprozesses notwendige gasförmige Stickstoff wird mittels eines Verdampfers aus dem flüssigen Stickstoff erzeugt. Durch eine allmählich ansteigende Menge von flüssigem Stickstoff, die in den gasförmigen Stickstoff eingespritzt wird, wird die Temperatur des gasförmigen Stickstoffs immer weiter abgesenkt.

Die JP 3 818 328 A D1 beschreibt ein Verfahren zur Abkühlung eines supraleitenden Kabelsystems, wobei das Verfahren in zwei aufeinanderfolgenden Schritten durchgeführt wird. Zuerst wird ein Kühlsystem für das Kabelsystem gekühlt und erst anschließend das Kabelsystem selbst gekühlt. Auf diese Weise wird die Menge an verdampfendem Kühlmittel und Druckschwankungen reduziert.

Hiervon ausgehend hat die vorliegende Erfindung die Aufgabe, ein verbessertes Verfahren vorzuschlagen, um ein supraleitfähiges Kabel oder ein supraleitfähiges Kabelsystem zur Vorbereitung eines Normalbetriebs abzukühlen und im Normalbetrieb auf der Betriebstemperatur zu halten.

### Zusammenfassung der Erfindung

Zur Lösung dieser Aufgabe schlägt die Erfindung ein Verfahren gemäß Anspruch 1 vor, um ein supraleitfähiges Kabelsystem mit wenigstens einem supraleitfähigen Kabel auf eine Betriebstemperatur unterhalb der Sprungtemperatur zu kühlen. Das supraleitfähige Kabel ist innerhalb eines Kryostaten angeordnet, der ein thermisch isoliertes Rohr aufweist, welches das supraleitfähige Kabel und einen Hohlraum umschließt. Das supraleitfähige Kabel ist mit einem durch den Kryostaten strömenden Kühlmittel, das von einer Kühlanlage abgegeben wird, auf eine Temperatur unterhalb der Sprungtemperatur des supraleitfähigen Kabels abkühlbar. Das Kühlmittel strömt durch eine Rückleitung zu der Kühlanlage zurück. Erfindungsgemäß ist das Verfahren in einer Normalbetriebsart und einer Abkühlbetriebsart betreibbar. Die Abkühlbetriebsart umfasst folgende Schritte
- Einleiten von flüssigem Kühlmedium in die Rückleitung des Kabelsystems, wobei das Kühlmittel in einer Anfangsphase in der Rückleitung verdampft;
- Durchleiten des Kühlmittels durch das mindestens eine supraleitfähige Kabel in einer ersten Richtung, die das Kühlmittel zu der Kühlanlage zurückführt; und
- Umkehren der Kühlmittelströmungsrichtung, wenn das supraleitfähige Kabel auf eine vorgegebene Temperatur abgekühlt ist.

Das erfindungsgemäße Verfahren hat den Vorteil, dass in dem Kabelsystem keine Verdampfereinrichtung für das Kühlmittel mehr benötigt wird, weil das Kühlmittel während des Abkühlvorganges zunächst in der Rückleitung verdampft, die unempfindlich gegenüber großen Temperaturschwankungen ist. Temperaturempfindliche Bauteile, die beispielsweise in den Endverschlüssen angeordnet sind, sind dennoch keinen Temperaturschocks ausgesetzt, weil das Kühlmittel, insbesondere der flüssige Stickstoff, in der Rückleitung verdampft, sodass zu Beginn des Abkühlvorganges nur gasförmiger Stickstoff die Endverschlüsse erreicht. Durch den gasförmigen Stickstoff werden die Endverschlüsse materialschonend auf immer tiefere Temperaturen abgekühlt bis sie schließlich Temperaturen erreichen, die der Temperatur des flüssigen Kühlmittels entsprechen oder zumindest nahe kommen. Wenn schließlich flüssiger Stickstoff als Kühlmittel auf die Endverschlüsse trifft, tritt somit kein Temperaturschock mehr auf. Die Kühlanlage kann so ausgebildet sein, dass verdampftes Kühlmittel an die Umgebung abgegeben wird.

Gemäß einer Weiterbildung der Erfindung erfolgt das Umkehren der Kühlmittelströmungsrichtung dann, wenn das Kabel vollständig mit flüssigem Stickstoff gefüllt ist.

Es wird ein supraleitfähiges Kabelsystem mit mehreren supraleitfähigen Kabeln vorgeschlagen, die jeweils innerhalb eines Kryostaten angeordnet sind. Der Kryostat weist ein thermisch isoliertes Rohr auf, welches das supraleitfähige Kabel und einen Hohlraum umschließt. Weiterhin ist eine Kühlanlage vorgesehen, die ein Kühlmittel abgibt, welches durch die Kryostaten der supraleitfähigen Kabel strömt und die supraleitfähigen Kabel auf eine Temperatur unterhalb der Sprungtemperatur kühlt. Eine Rückleitung führt das Kühlmittel, welches durch die supraleitfähigen Kabel hindurchgeströmt ist, zu der Kühlanlage zurück. Das erfindungsgemäße Kabelsystem zeichnet sich dadurch aus, dass jedes supraleitfähige Kabel an jedem seiner Enden einen Endverschluss aufweist, der ein Ventil umfasst, um Strömungswege in dem supraleitfähigen Kabelsystem freizugeben, zu sperren und/oder umzulenken. Das Ventil kann als Wegeventil ausgebildet sein. Die Wegeventile können einzelne Kabel von dem Kühlmittelkreislauf trennen, zum Beispiel dann, wenn an einem einzelnen supraleitfähigen Kabel ein Defekt aufgetreten ist. Gleichzeitig ermöglichen es die Wegeventile, die anderen supraleitfähigen Kabel weiterhin in Betrieb zu halten. Die Wegeventile gestatten es darüber hinaus, die Kühlmittelströme so umzuschalten, dass in dem Kabelsystem das Verfahren gemäß dem ersten Aspekt der Erfindung ausführbar ist. Mittels der Wegeventile ist es folglich möglich, ein defektes supraleitfähiges Kabel und/oder die Rückleitung aufzuwärmen.

Die Kühlanlage ist dazu eingerichtet, ein Strömen des Kühlmittels in zwei entgegengesetzte Richtungen zu bewirken. Diese Eigenschaft der Kühlanlage ist deshalb besonders zweckmäßig, weil sie es gestattet, in dem supraleitfähigen Kabelsystem eine Normalbetriebsart und eine Abkühlbetriebsart zu realisieren.

An den Endverschlüssen können Sensoren angeordnet sein, welche die Temperatur des Kühlmittels erfassen. Mittels der Sensoren ist es möglich, zu entscheiden, ob die Endverschlüsse ausreichend abgekühlt sind, um von der Abkühlungsbetriebsart auf die Normalbetriebsart umzuschalten. Mit dieser Überwachung der Temperatur kann man vermeiden, dass durch einen Temperaturschock eine Beschädigung an oder in einem der Endverschlüsse des Kabelsystems auftritt.

Die Kühlanlage kann eine Steuereinrichtung aufweisen, welche die Sensorsignale empfängt und die Strömungsrichtung des Kühlmittels entsprechend steuert. Wenn während des Abkühlvorganges an einem Endverschluss flüssiger Stickstoff durch eine Temperaturmessung festgestellt wird, wird die Strömungsrichtung umgekehrt, um von der Abkühlungsbetriebsart in die Normalbetriebsart überzugehen. Grundsätzlich ist es aber auch möglich, dass eine Bedienungsperson die Strömungsrichtung manuell umschaltet.

Die Rückleitung ist mittels Absperrventilen von einem Kühlmittelkreislauf isolierbar. Das Vorhandensein von einem oder mehreren Absperrventil(en) ermöglicht es, die Rückleitung und/oder eines der Kabel aufzuwärmen, während eines oder mehrere supraleitfähige Kabel des Kabelsystems weiterhin gekühlt bleiben.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine schematische Darstellung eines supraleitfähigen Kabels;
- Fig. 2: eine schematische Darstellung des Aufbaus des supraleitfähigen Kabels aus Figur 1;
- Fig. 3: ein Kabelsystem aus drei supraleitfähigen Kabeln im Normalbetrieb;
- Fig. 4: das Kabelsystem aus Figur 3 in größerer Einzelheit;
- Fig. 5: das Kabelsystem aus Figur 3 im Abkühlbetrieb; und
- Fig. 6: ein Flussdiagramm des erfindungsgemäßen Verfahrens.

Gleiche oder ähnliche Elemente sind in den Figuren mit gleichen oder ähnlichen Bezugszeichen versehen.

### Ausführungsbeispiel

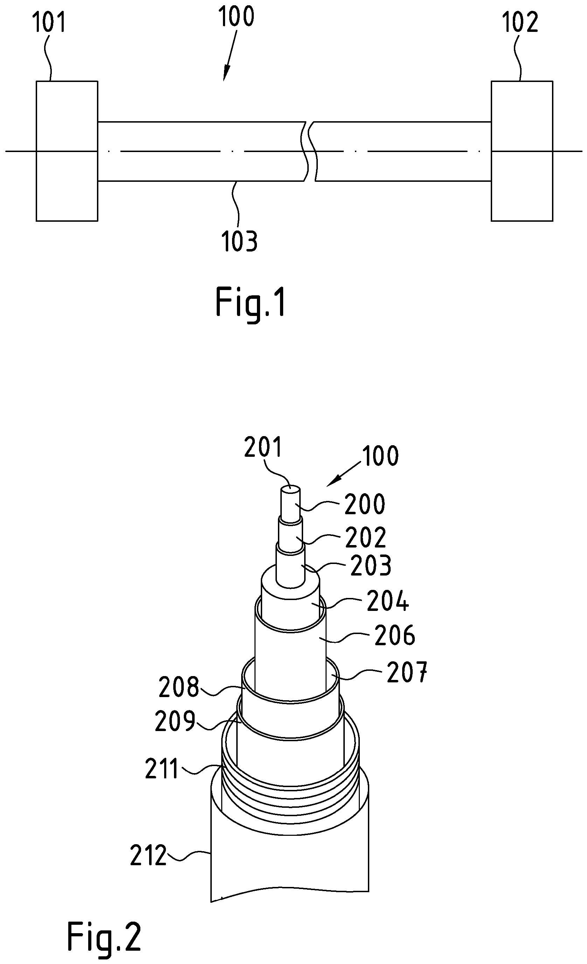

In Figur 1 ist rein schematisch ein supraleitfähiges Kabel 100 dargestellt, das an seinen Enden jeweils einen Endverschluss 101, 102 aufweist. Zwischen den Endverschlüssen 101, 102 erstreckt sich ein Kabelkryostat 103, der auch kurz als Kryostat bezeichnet wird. Der Kryostat 103 umschließt mindestens eine supraleitfähige Kabelader. Das supraleitfähige Kabel 100 bestehend aus Kryostat und Kabelader ist in Figur 2 in größerer Einzelheit dargestellt. Die Endverschlüsse 101, 102 ermöglichen den Anschluss Supraleiterkabels an konventionelle Mittelspannungs- oder Hochspannungstechnik und dienen außerdem dazu, den Temperatursprung zwischen dem stickstoffgekühlten supraleitfähigen Kabel und damit in Berührung stehender Komponenten und der Umgebung zu bewältigen.

In einem anderen Ausführungsbeispiel ist anstelle des Endverschlusses 101 und oder des Endverschlusses 102 eine Muffe vorgesehen, die eine Verbindungsstelle zu einem weiteren supraleitfähigen Kabel 100 bildet. Auf diese Weise ist es möglich, das supraleitfähige Kabel 100 zu verlängern.

Figur 2 zeigt beispielhaft den Aufbau des supraleitfähigen Kabels 100. Auf einem hohlen Formkörper 200, der einen Hohlraum 201 umschließt, sind supraleitfähige Bänder angeordnet, die eine supraleitfähige Schicht 202 bilden. Die supraleitfähige Schicht 202 ist von einer bandförmigen halbleitenden Leiterglättung 203 umgeben. Auf der Leiterglättung 203 ist ein Dielektrikum 204 angeordnet, dass von einem elektrisch leitenden Schirm 206 umgeben ist, der zum Beispiel aus Kupferdrähten oder Kupferbändern oder ebenfalls aus supraleitfähigen Bändern gebildet ist. Zwischen Dielektrikum 204 und Schirm 206 ist eine weitere halbleitende Schicht (nicht dargestellt) angeordnet. Die halbleitenden Schichten dienen der Glättung des elektrischen Felds im Kabel, indem sie runde Oberflächen schaffen und Kanten eliminieren.

Die genannten Komponenten sind in einem Hohlraum 207 angeordnet, der von einem inneren Kryostatrohr 208 umschlossen ist. Im Betrieb des supraleitfähigen Kabels 100 fließt das zur Kühlung eingesetzte Kühlmittel in dem Hohlraum 207. Die Außenseite des inneren Kryostatrohres 208 ist von einer Superisolation 209 umgeben, die ihrerseits von einem äußeren Kryostatrohr 211 eingeschlossen ist. Der Zwischenraum zwischen dem inneren Kryostatrohr 208 und dem äußeren Kryostatrohr 211 ist evakuiert und bildet eine Vakuumisolation zwischen dem inneren Kryostatrohr 208 und dem äußeren Kryostatrohr 211. Bei manchen Ausführungsbeispielen sind zusätzlich zu der Superisolation 209 Abstandshalter (nicht gezeigt) vorgesehen, die verhindern, dass sich die Kryostatrohre 208, 211 berühren. Die Kryostatrohre 208, 211 sind vorzugsweise aus Edelstahl hergestellt. Mit Vorteil sind die Kryostatrohre 208, quer zu ihrer Längsrichtung oder schraubenlinienförmig gewellt. Zum Schutz vor Beschädigungen und vor anderen Umwelteinflüssen wie Feuchtigkeit oder aggressiven Substanzen ist das äußere Kryostatrohr 211 von einem Mantel umgeben, der beispielsweise aus Polyethylen (PE) oder (PVC) hergestellt ist.

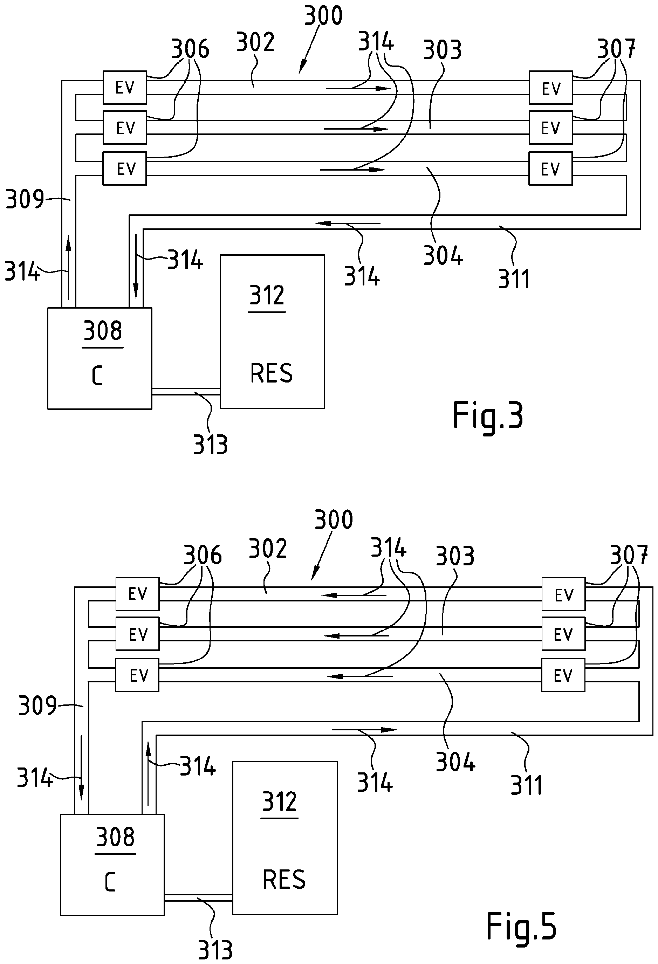

Figur 3 zeigt ein supraleitfähiges Kabelsystem 300 mit drei supraleitfähigen Kabeln 302, 303 und 304. Die supraleitfähigen Kabeln 302, 303 und 304 sind beispielsweise so aufgebaut wie das in Figur 2 gezeigte Kabel 100. Jedes der supraleitfähigen Kabel 302, 303, 304 ist an seinem ersten Ende mit einem Endverschluss 306 versehen und an seinem zweiten Ende mit einem Endverschluss 307. Eine Kühlanlage 308 ist über eine Zufuhrleitung 309 für Kühlmittel mit jedem der Endverschlüsse 306 verbunden. Die Endverschlüsse 307 sind über eine Rückleitung 311 für Kühlmittel an die Kühlanlage 308 angeschlossen. Ein Kühlmittelvorratstank 312, der mit Vorteil als Kryotank ausgebildet ist, ist über eine Speiseleitung 313 mit der Kühlanlage 308 verbunden. Die Zufuhrleitung 309, die Rückleitung 311 sowie die Speiseleitung 313 sind vorzugsweise als Kryoleitungen ausgebildet, d.h. als doppelwandige vakuumisolierte Leitungen.

Im Normalbetrieb wird von der Kühlanlage 308 flüssiger Stickstoff über die Zufuhrleitung 309 zu dem Endverschluss 306 gefördert, von wo aus er in die supraleitfähigen Kabel 302-304 eintritt und die Supraleiter kühlt. An den Endverschluss 307 tritt das Kühlmittel wieder aus dem Kryostaten aus und wird über die Rückleitung 311 gesammelt und an die Kühlanlage 308 zurückgeführt. Die Strömungsrichtung des flüssigen Stickstoffs ist in Figur 3 durch Pfeile 314 angezeigt. Im Betrieb nimmt der als Kühlmittel eingesetzte flüssige Stickstoff Wärme auf, die aus der Umgebung auf das Kabelsystem 300 sowie die damit verbundenen Einrichtungen einstrahlt. Diese Wärme wird von dem Kühlmittel abtransportiert und mittels der Kühlanlage 308 dem Kühlmittel wieder entzogen. Zufuhrleitung 309, supraleitfähige Kabel 302-304, Rückleitung 311 und Kühlanlage 308 bilden einen Kühlkreislauf. Grundsätzlich handelt es sich bei dem Kühlkreislauf um einen geschlossenen Kreislauf.

Nach Betriebsunterbrechungen, zum Beispiel nach einer Reparatur an einem oder mehreren der supraleitfähigen Kabel 302-304, besteht ein Bedarf an zusätzlichem flüssigen Stickstoff, um das betroffene supraleitfähige Kabel bzw. das gesamte Kabelsystem wieder mit flüssigem Stickstoff zu befüllen. Dieser Bedarf an zusätzlichem flüssigem Stickstoff wird aus dem Vorratstank 312 gedeckt und mittels der Speiseleitung 313 der Kühlanlage 308 zugeführt. Verluste an flüssigem Stickstoff, die von kleinen Leckagen in dem Kabelsystem 300 verursacht sind, werden ebenfalls mit flüssigem Stickstoff aus dem Vorratstank 312 wieder ausgeglichen.

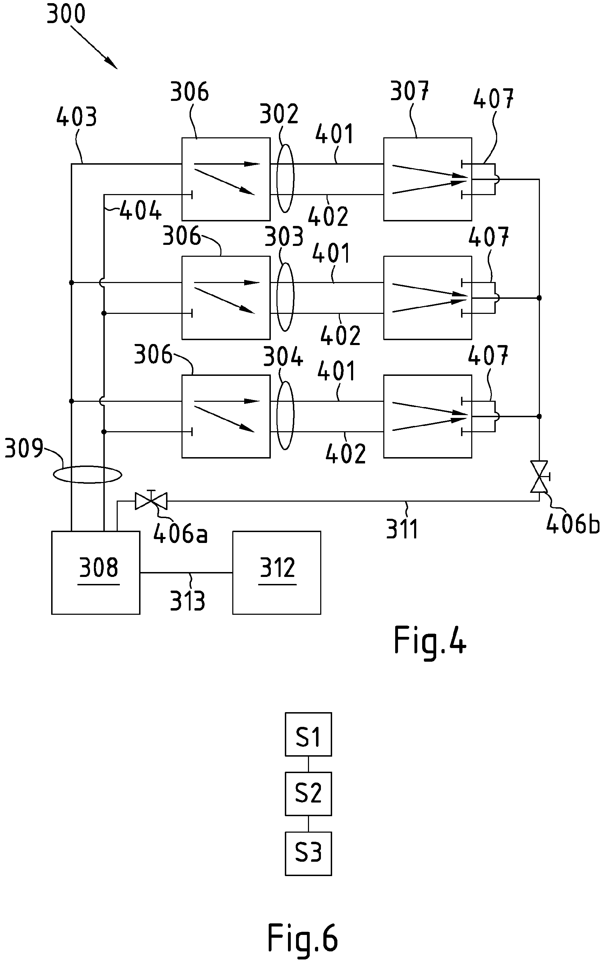

Figur 4 zeigt die fluidtechnischen Schaltungsmöglichkeiten des Kabelsystems aus Figur 3 in größerer Einzelheit. In Figur 4 sind die Hohlräume 201 und 207, in denen im Betrieb Kühlmittel strömen kann, als getrennte Leitungen gezeigt, die in Figur 4 als Linie dargestellt sind. Insbesondere ist jeder Hohlraum 207 als Außenleiter 401 und jeder innere Hohlraum 201 als Innenleiter 402 dargestellt. In entsprechender Darstellung ist veranschaulicht, dass die Zufuhrleitung 309 ebenfalls aus zwei getrennten Leitungen 403 und 404 aufgebaut ist, die zum Beispiel als Koaxialleitungen in einem gemeinsamen Kryostaten oder als getrennte Leitungen ausgeführt sind. Die Endverschlüsse 306, 307 sind als Wegeventile ausgebildet, die dazu dienen, den Weg des Kühlmittels durch das Kabelsystem, insbesondere durch einzelne Fluid- bzw. Kühlmittelleitungen zu verbinden, zu sperren oder umzulenken, was im Folgenden noch erläutert wird. Die Rückleitung 311 ist als einzelne Rohrleitung ausgebildet, die mittels Absperrungsventilen 406a, 406b von dem Kühlmittelkreislauf abtrennbar ist.

Das insoweit beschriebene Kabelsystem 300 lässt sich durch unterschiedliche fluidtechnische Verschaltungen zahlreiche Betriebsarten des Kabelsystems 300 zu.

Eine wichtige erste Betriebsart ist der parallele Betrieb des Außen- und Innenleiters 401, 402 in jedem Kabel 302-304, bei dem durch Außen- und Innenleiter 401, 402 das Kühlmittel, insbesondere flüssiger Stickstoff, im Vorlauf strömt. Das Kühlmittel wird durch die Rückleitung 311 zu der Kühlanlage 308 zurückgeführt. Diese Betriebsart weist die größte Kühlleistung auf, sodass das Kabelsystem 300 die tiefste Betriebstemperatur erreicht und infolgedessen die größte Stromtragfähigkeit aufweist. Grundsätzlich gestattet das Kabelsystem 300 auch andere Betriebsarten, die ohne den Einsatz der Rückleitung 311 auskommen. Diese Betriebsarten sind besonders dann vorteilhaft, wenn an der Rückleitung 311 oder einem der supraleitfähigen Kabel 302-304 ein Defekt auftritt.

Eine zweite Betriebsart wird der Einfachheit halber am Beispiel eines einzigen supraleitfähigen Kabels beschrieben, weil in dieser Betriebsart von einem Kabelsystem mit mehreren supraleitfähigen Kabeln alle Kabel in gleicher Weise betrieben werden. Gemäß dieser zweiten Betriebsart strömt das Kühlmittel in dem Außenleiter 401 im Vorlauf durch das supraleitfähige Kabel und der Innenleiter 402 bildet einen Rücklauf, in welchem das Kühlmittel zurückgeführt wird. Die dafür benötigte Verbindung zwischen dem Außenleiter 401 und dem Innenleiter 402 wird mittels des Endverschlusses 307 und einer Verbindungsleitung 407 hergestellt. In diesem Fall bildet zum Beispiel die Leitung 403 den Vorlauf von der Kühlanlage 308 und die Leitung 404 die Rückleitung zu der Kühlanlage 308.

Gemäß einer dritten Betriebsart werden in allen Kabeln der Außenleiter 401 unter Innenleiter 402 parallelgeschaltet. Bei dem in Figur 4 dargestellten konkreten Ausführungsbeispiel bilden beispielsweise die supraleitfähigen Kabel 302 und 303 den Vorlauf, während das Kabel 304 den Rücklauf bildet. Die Kabel 302-304 sind auch mit vertauschten Rollen einsetzbar. Auch in diesem Fall bildet zum Beispiel die Leitung 403 den Vorlauf von der Kühlanlage 308 und die Leitung 404 die Rückleitung zu der Kühlanlage 308. Allgemeiner gesprochen ist es bei der dritten Betriebsart vorgesehen, dass eine Gruppe der supraleitfähigen Kabel des Kabelsystems 300 eine Vorlaufleitung für das Kühlmittel während eine andere Gruppe von supraleitfähigen Kabel eine Rücklaufleitung bildet.

Eine vierte Betriebsart kommt bei einem Kabelsystem zum Einsatz, bei dem die verwendeten supraleitfähigen Kabel nur einen einzigen Kühlkanal aufweisen. Gemäß der vierten Betriebsart wird das Kabelsystem so konfiguriert, dass das Kühlmittel von der Kühlanlage durch zwei Kabel zirkuliert und das dritte Kabel und die Rückleitung aufgewärmt werden können. In einer Variante der vierten Betriebsart zirkuliert der flüssige Stickstoff durch die Rückleitung und eines der Kabel, während die beiden anderen Kabel aufgewärmt werden. Die prinzipielle Funktionsweise unterscheidet sich von der Darstellung in Figur 4 nur dadurch, dass zum Beispiel die Leitungen 401 in jedem der Kabel 302-304 weglassen sind.

Die beschriebenen vier Betriebsarten sind nur beispielhaft angeführt und aufgrund der Schaltmöglichkeiten der Wegeventile in den Endverschlüssen sind noch andere Betriebsarten für einen Fachmann darstellbar.

Hierbei ist zu beachten, dass die unterschiedlichen Betriebsarten allein durch geänderte Einstellungen der Wegeventile in den Endverschlüssen 306 bzw. 307 realisiert werden.

Unabhängig von der gewählten Betriebsart ist es grundsätzlich wünschenswert, das supraleitfähige Kabelsystem langsam abzukühlen, weil besonders in den Endverschlüssen 306, 307 Teile aus Kunststoff und faserverstärkten Kunststoff oder Bauteile mit ähnlichen Eigenschaften verbaut sein können, die bei einem sehr schnellen abkühlen Schaden nehmen könnten.

Das erfindungsgemäße Verfahren zum Abkühlen des Kabelsystems wird nun im Folgenden anhand der ersten Betriebsart mit Bezug auf Figur 5 beschrieben.

Ausgangspunkt ist ein aufgewärmtes Kabelsystem 300. Die Kühlanlage 308 wird nun so angesteuert, dass flüssiger Stickstoff in die Rückleitung gepumpt wird. Da die Rückleitung auf Umgebungstemperatur ist, verdampft der Stickstoff zumindest in einer Anfangsphase beim Eintritt in die Rückleitung 311. Der dabei entstehende gasförmige Stickstoff strömt durch die Rückleitung durch die Endverschlüsse 307 und kühlt dabei die Endverschlüsse und die supraleitfähigen Kabel 302-304 allmählich ab. Durch den einströmenden flüssigen Stickstoff wird die Rückleitung kontinuierlich immer weiter abgekühlt, sodass der flüssige Stickstoff in der Rückleitung immer weiter in Richtung auf die Endverschlüsse 307 vordringt. Bevor jedoch flüssiger Stickstoff an den Endverschlüssen ankommt, sind die Endverschlüsse 307 und die supraleitfähigen Kabel 302-304 bereits durch das Stickstoffgas auf eine so tiefe Temperatur abgekühlt, sodass es zu keinem Temperaturschock kommt, wenn der flüssige Stickstoff mit den Endverschlüssen 307 in Kontakt kommt. Der Abkühlvorgang kann nun noch eine Weile fortgeführt werden, beispielsweise so lange bis auch an den Endverschlüssen 306 flüssiger Stickstoff ankommt, was beispielsweise mit einem Temperatursensor feststellbar ist oder mittels einer Probenöffnung, aus gegebenenfalls der flüssige Stickstoff ausströmt. Die supraleitfähigen Kabel 302-304 sind dann vollständig mit flüssigem Stickstoff gefüllt. In diesem Moment wird das Wegeventil in der Kühlanlage 308 umgeschaltet und das Kühlmittel strömt in der Richtung durch das Kabelsystem die durch die Pfeile 314 in Figur 3 gezeigt sind. Die Umschaltung des Wegeventils kann manuell erfolgen.

Das erfindungsgemäße Verfahren zum Abkühlen des Kabelsystems hat den Vorteil, dass kein Verdampfer für flüssigen Stickstoff wie bei herkömmlichen supraleitfähigen Kabelsystemen notwendig ist. Darüber hinaus ermöglichen es die Wegeventile in den Endverschlüssen ein defektes supraleitfähiges Kabel von den anderen supraleitfähigen Kabeln zu isolieren und dieses Kabel aufzuwärmen. Bei dem in Figur 4 dargestellten Kabelsystem 300 mit drei supraleitfähigen Kabeln ist es beispielsweise möglich, die Kabel 303 und 304 gemäß der zweiten Betriebsart weiter zu betreiben, wenn in dem Kabel 302 ein Defekt auftritt. Das Kabel 302 und die Rückleitung 311 werden in diesem Fall von dem Kühlkreislauf abgetrennt und wärmen sich allmählich auf. Nach einer ausreichenden Wartezeit kann der Defekt repariert werden. Dabei ist es gleichzeitig möglich eine Zirkulation des flüssigen Stickstoffs durch die zwei übrigen Kabel aufrecht zu erhalten, sodass der Betrieb des Kabelsystems auch während der Reparatur fortgesetzt werden kann, wenn auch mit einer geringeren Übertragungskapazität. Nach Abschluss der Reparatur wird das beschriebene Abkühlverfahren wieder angewendet.

In Figur 6 sind die Wesentlichen Schritte des erfindungsgemäßen Verfahrens, um ein supraleitfähiges Kabelsystem zu kühlen, in einem Flussdiagramm veranschaulicht. In einem ersten Schritt S1 wird das flüssige Kühlmedium, insbesondere flüssiger Stickstoff, in die Rückleitung des Kabelsystems eingeleitet, wo der flüssige Stickstoff unter Wärmeaufnahme verdampft. Das sich so bildende gasförmige Stickstoff breitet sich entlang der Rückleitung in dem Kabelsystem aus. Gemäß einem zweiten Schritt S2 wird der gasförmige Stickstoff durch mindestens ein supraleitfähiges Kabel geleitet. Dabei wird das supraleitfähige Kabel von dem gasförmigen Stickstoff abgekühlt, wobei im Laufe der Zeit die Temperatur immer weiter absinkt. Wenn dabei das supraleitfähige Kabel vollständig mit flüssigem Stickstoff gefüllt ist, wird in einem dritten Schritt S3 die Kühlmittelströmungsrichtung in dem supraleitfähigen Kabelsystem umgekehrt. Das erfindungsgemäße Verfahren hat den Vorteil, dass in dem Kabelsystem keine Verdampfereinrichtung für das Kühlmittel mehr benötigt wird, weil das Kühlmittel während des Abkühlvorganges zunächst in der Rückleitung verdampft, die unempfindlich gegenüber großen Temperaturschwankungen ist. Temperaturempfindliche Bauteile, die beispielsweise in den Endverschlüssen 306, 307 angeordnet sind, sind dennoch keinen Temperaturschocks ausgesetzt, weil das Kühlmittel, insbesondere der flüssige Stickstoff, in der Rückleitung verdampft, sodass zunächst nur gasförmiger Stickstoff die Endverschlüsse erreicht.

Auch wenn in der Beschreibung als Kühlmittel stets flüssiger Stickstoff genannt ist so ist die Erfindung nicht auf dieses Kühlmittel beschränkt, sondern auch bei anderen Kühlmitteln einsetzbar.

Anstelle der Wegeventile können auch Absperrventile eingesetzt werden, die entsprechende Leitungsverbindungen herstellen. Darüber hinaus ist es auch denkbar, dass die Kühlanlage 308 mit einer reversiblen Pumpe ausgestattet ist, um die Strömungsrichtung des Kühlmittels umzukehren.

In den Ansprüchen schließen die Wörter "aufweisen" und "umfassen" nicht andere Elemente oder Schritte aus und der unbestimmte Artikel "ein" schließt eine Mehrzahl nicht aus.

Die Tatsache, dass einzelne Funktionen und Elemente in unterschiedlichen abhängigen Ansprüchen aufgeführt sind, bedeutet nicht, dass nicht auch eine Kombination dieser Funktionen und Elemente vorteilhaft verwendet werden könnte.

**Bezugszeichenliste**

| | | | |
|---|---|---|---|
| 100 | supraleitfähiges Kabel | 404 | Leitung |
| 101, 102 | Endverschluss | | |
| 200 | hohler Formkörper | 406a, 406b | Absperrventile |
| 201 | Hohlraum | | |
| 202 | Supraleitfähige Leiterschicht | | |
| 203 | Schutzhülle | | |
| 204 | Dielektrikum | | |
| 206 | Schirm | | |
| 207 | Hohlraum | | |
| 208 | Inneres Kryostatrohr | | |
| 209 | Superisolation | | |
| 211 | Äußeres Kryostatrohr | | |
| 212 | Mantel | | |
| 300 | Kabelsystem | | |
| 302- | Kabel | | |
| 304 306, 307 | Endverschluss | | |
| 308 | Kühlanlage | | |
| 309 | Zufuhrleitung | | |
| 311 | Rückleitung | | |
| 312 | Vorratstank | | |
| 313 | Speiseleitung | | |
| 314 | Strömungsrichtung | | |
| 401 | Außenleiter | | |
| 402 | Innenleiter | | |
| 403 | Leitung | | |

## Patentansprüche

1. Verfahren, um ein supraleitfähiges Kabelsystem (300) mit wenigstens einem supraleitfähigen Kabel (302-304) auf eine Betriebstemperatur unterhalb der Sprungtemperatur zu kühlen, wobei das supraleitfähige Kabel (302-304) innerhalb eines Kryostaten (208; 211) angeordnet ist, der ein thermisch isoliertes Rohr (208) aufweist, welches das supraleitfähige Kabel (302-304) und einen Hohlraum (207) umschließt, wobei das supraleitfähige Kabel mit einem durch den Kryostaten (208; 211) strömenden Kühlmittel, das von einer Kühlanlage (308) abgegeben wird, auf eine Temperatur unterhalb der Sprungtemperatur des supraleitfähigen Kabels kühlbar ist, wobei das Kühlmittel durch eine Rückleitung (311) zu der Kühlanlage zurückströmt, und wobei das Verfahren in einer Normalbetriebsart und einer Abkühlbetriebsart betreibbar ist, **dadurch gekennzeichnet, dass** die Abkühlbetriebsart folgende Schritte umfasst
- Einleiten (S1) von flüssigem Kühlmedium in die Rückleitung (311) des Kabelsystems (300), wobei das Kühlmittel in einer Anfangsphase in der Rückleitung verdampft;
- Durchleiten (S2) des Kühlmittels durch das mindestens eine supraleitfähige Kabel (302-304) in einer ersten Richtung, die das Kühlmittel zu der Kühlanlage (311) zurückführt; und
- Umkehren der Kühlmittelströmungsrichtung, wenn das supraleitfähige Kabel auf eine vorgegebene Temperatur abgekühlt ist.

2. Verfahren nach Anspruch 1, **dadurch gekennzeichnet, dass** das Umkehren der Kühlmittelströmungsrichtung dann erfolgt, wenn das Kabel vollständig mit flüssigem Stickstoff gefüllt ist.

## Claims

1. A method, in order to cool a super-conductive cable system (300) having at least one super-conductive cable (302-304) to an operating temperature below the transition temperature, wherein the super-conductive cable (302-304) is arranged within a cryostat (208; 211), which has a thermally insulated tube (208), which surrounds the super-conductive cable (302-304) and a cavity (207), wherein the super-conductive cable can be cooled with a coolant flowing through the cryostat (208; 211), which coolant is discharged from a cooling system (308), to a temperature below the transition temperature of the super-conductive cable, wherein the coolant flows back through a return line (311) to the cooling system, and wherein the method can be operated in a normal operating mode and a cooling operating mode, **characterized in that** the cooling operating mode comprises the following steps:
- Introducing (S1) liquid cooling medium into the return line (311) of the cable system (300), wherein the coolant evaporates in an initial phase in the return line;
- passing (S2) the coolant through the at least one super-conductive cable (302-304) in a first direction, which returns the coolant to the cooling system (311); and
- reversing the direction of flow of the coolant, if the super-conductive cable is cooled to a predetermined temperature.

2. The method according to claim 1, **characterized in that** the reversal of the direction of flow of the coolant takes place when the cable is completely filled with liquid nitrogen.

## Revendications

1. Procédé destiné à refroidir un système de câble (300) supraconducteur doté d'au moins un câble (302-304) supraconducteur à un température de fonctionnement inférieure à la température de transition, le câble (302-304) supraconducteur étant disposé à l'intérieur d'un cryostat (208 ; 211) qui comporte un tube (208) thermiquement isolé qui entoure le câble (302-304) supraconducteur et une cavité (207), le câble supraconducteur pouvant être refroidi à une température inférieure à la température de transition du câble supraconducteur avec un agent réfrigérant qui s'écoule à travers le cryostat (208 ; 211) et qui est délivré par une installation de refroidissement (308), l'agent réfrigérant refluant vers l'installation de refroidissement à travers une conduite de retour (311), et le procédé pouvant être exploité dans un mode de fonctionnement normal et dans un mode de fonctionnement de refroidissement, **caractérisé en ce que** le mode de fonctionnement de refroidissement comprend les étapes suivantes :
- introduction (S1) de fluide de refroidissement liquide dans la conduite de retour (311) du système de câble (300), l'agent de refroidissement se vaporisant dans une phase initiale dans la conduite de retour ;
- passage (S2) de l'agent de refroidissement à travers le câble (302-304) supraconducteur au moins au nombre de un dans une première direction qui ramène l'agent de refroidissement vers l'installation de refroidissement (311) ; et
- inversion de la direction d'écoulement de l'agent de refroidissement quand le câble supraconducteur a refroidi jusqu'à une température prédéfinie.

2. Procédé selon la revendication 1, **caractérisé en ce que** l'inversion de la direction d'écoulement de l'agent de refroidissement s'effectue quand le câble est complètement rempli d'azote liquide.
